(19) Europäisches Patentamt
European Patent Office
Office européen des brevets

(11) Publication number: **0 282 062 B1**

(12) # EUROPEAN PATENT SPECIFICATION

(45) Date of publication of patent specification: **15.07.92**

(51) Int. Cl.5: **C08G 64/04**, C08G 64/10

(21) Application number: **88103823.6**

(22) Date of filing: **10.03.88**

The file contains technical information submitted after the application was filed and not included in this specification

(54) **Plastic optical fiber.**

(30) Priority: **11.03.87 JP 55532/87**

(43) Date of publication of application:
**14.09.88 Bulletin 88/37**

(45) Publication of the grant of the patent:
**15.07.92 Bulletin 92/29**

(84) Designated Contracting States:
**BE CH DE FR GB IT LI NL SE**

(56) References cited:
**EP-A- 0 029 111**
**WO-A-82/02380**
**WO-A-82/02402**
**WO-A-86/01511**
**US-A- 4 170 587**

**CHEMICAL ABSTRACTS, vol. 107, no. 12, 21st September 1987, pages 54-55, abstract no. 97892f, Columbus, Ohio, US; & JP - A - 62 98303**

**OPTICAL FIBRES, J.Geisler, PERGAMON PRESS, 1986**

(73) Proprietor: **IDEMITSU PETROCHEMICAL CO. LTD.**
**1-1, Marunouchi 3-chome Chiyoda-ku**
**Tokyo 100(JP)**

(72) Inventor: **Okamoto, Masaya c/o Idemitsu Petrochemical**
**Company Limited 1-1, Anegasakikaigan**
**Ichihara-shi Chiba-ken(JP)**

(74) Representative: **TER MEER - MÜLLER - STEINMEISTER & PARTNER**
**Mauerkircherstrasse 45**
**W-8000 München 80(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

The present invention relates to a plastic optical fiber and more particularly to a plastic optical fiber excellent in heat resistance which can be suitably utilized as light sensor means and optical communication means provided in high temperature parts, for example, in engine rooms of automobiles or ships.

Optical fibers made of inorganic glass materials have been widely used. Recently, however, optical fibers made of plastic materials have been developed as inexpensive optical fibers which are higher in bending stress than those made of inorganic glass materials and easy in handling and some of them have already been practically used.

These plastic optical fibers generally consist of a core comprising a polymer high in light transmittance and a cladding comprising a polymer having a refractive index lower than that of the core and superior in transparency. Specifically, there has been proposed an optical fiber consisting of a core comprising a polycarbonate and a cladding comprising a resin having a refractive index lower than that of the polycarbonate, for example, polymethyl methacrylate. (cf. Japanese Patent Unexamined Publication (Kokai) No.210303/86).

However, since glass transition temperature (Tg) of polymethyl methacrylate is about 100 ° C, optical fibers in which polymethyl methacrylate is used abruptly decrease in light transmitting properties under conditions of use at higher than 100 ° C. As a result, the optical fibers utilizing polymethyl methacrylate suffer from the problem that it is difficult to use them under high temperature conditions.

As an approach to solve this problem, a plastic optical fiber of three-layer structure comprised of a core and a cladding layer clad with a protective layer superior in heat resistance has been proposed. (cf. Japanese Patent Unexamined Publication (Kokai) No.02004/85 in : Patent Abstracts of Japan, Vol. 9, 156, 60-32004). In such plastic optical fiber, there is a new problem that production process becomes complicated because of complication of the layer structure.

Under the circumstances, development of plastic optical fibers superior in heat resistance with simple layer structure has now been desired.

SUMMARY OF THE INVENTION

The object of the present invention is to provide a novel plastic optical fiber which has no problems as referred to above, is superior in heat resistance with a simple structure and free from reduction in light transmitting properties under the operation conditions at higher than 100 ° C.

As a result of the inventor's intensive researches for attaining the object, it has been found that when a cladding layer is composed of a specific polycarbonate obtained from 2,2-bis-(4-hydroxyphenyl)-1,1,1,3,3,3-hexafluoropropane (BPAF), a light transmitting fiber which is excellent in heat resistance and besides has a simple two-layer structure can be obtained. The present invention is based on this finding.

The gist of the present invention for attaining the above object is a plastic optical fiber, characterized in that it comprises a core and a cladding as fundamental structural units, said cladding layer comprises a polycarbonate having the recurring unit represented by the following formula (1):

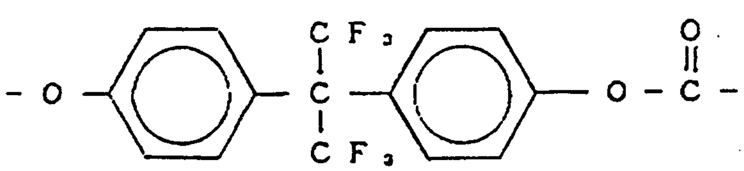

(1)

and refractive index of the core is higher than that of the cladding layer by at least 0.01.

DESCRIPTION OF THE INVENTION

The cladding layer comprises a polycarbonate having the recurring unit represented by the above formula (1) and this polycarbonate may be represented by the following general formula (2):

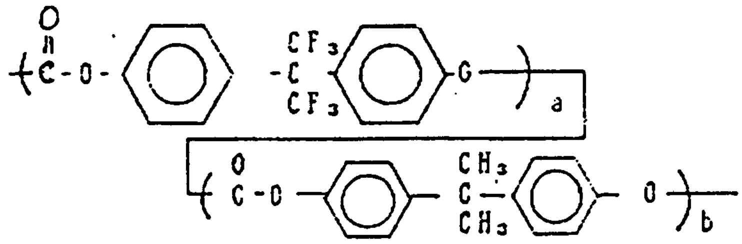

(2)

(wherein a and b each represents molar amount of each recurring unit in the polymer).

This polycarbonate may either be a block copolymer or a random copolymer of the recurring units in the above formula (2), but preferred is a random copolymer.

In the present invention, preferably polycarbonates are those of the formula (2) wherein a and b satisfy the relation: $[a/(a+b)] \times 100 \geqq 20$. When the value is less than 20, loss in light transmission of the resulting optical fiber tends to become great.

The above b may be 0 and in this case the cladding layer comprises a polycarbonate consisting of only the recurring unit of the formula (1).

Molecular weight of the polycarbonate which constitutes the cladding layer is usually 10000 - 50000, preferably 15000 - 30000.

Glass transition temperature (Tg) of said polycarbonate is normally 157°C or higher and refractive index thereof is normally 1.57 or less. When the glass transition temperature (Tg) is lower than 157°C, the resulting optical fiber may be unsatisfactory and when the refractive index is more than 1.57, some problems occur.

The polycarbonate which constitutes cladding layer is derived from 2,2-bis-(4-hydroxyphenyl)-1,1,1,3,3,3-hexafluoropropane (BPAF) represented by the following formula (3):

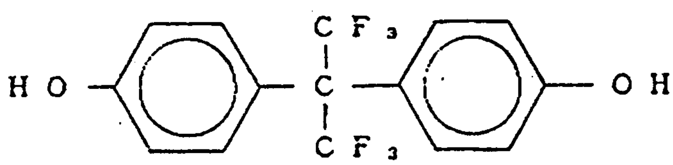

(3)

That is, this polycarbonate may be produced, for example, by polycondensation of said BPAF with a polycarbonate oligomer obtained by phosgenation reaction of bisphenol A, for example, by solvent method.

For example, methylene chloride, chlorobenzene and xylene may be used as solvents used for the polycondensation of polycarbonate oligomer and BPAF.

As oxygen binding agent, mention may be made of, for example, hydroxides such as sodium hydroxide and potassium hydroxide and pyridine.

Furthermore, tertiary amines such as triethylamine or quaternary salts thereof may be used for acceleration of polycondensation reaction and besides a terminator such as t-butyl phenol may also be used for adjustment of average molecular weight.

As the polymers which constitute the core, there may be used those which have a refractive index higher than that of the cladding layer by at least 0.01 and are high in transparency.

When the difference between refractive index of the core and that of the cladding layer is less than 0.01, optical fibers less in loss of light transmittance cannot be obtained.

As the polymers which constitute the core, mention may be made of, for example, polycarbonates represented by

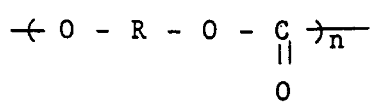

such as alicyclic polycarbonates where said R is

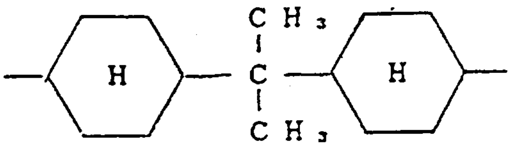

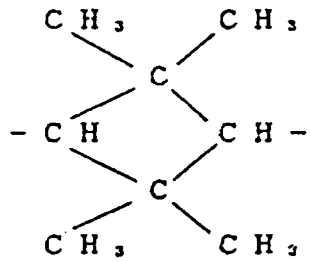

and aromatic polycarbonates wherein said R is

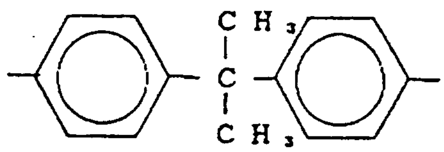

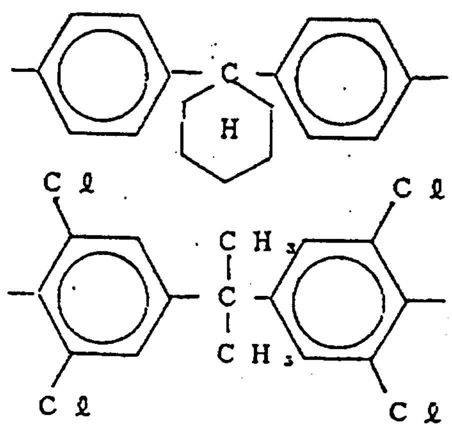

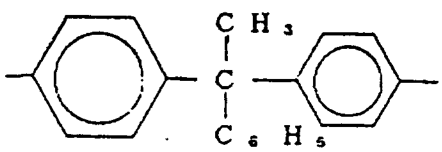

Among these polycarbonate resins, especially preferred are aromatic polycarbonates having the recurring unit represented by the following formula (4):

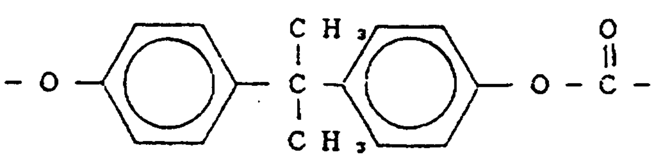

(4)

The optical fiber of the present invention can be produced by composite spinning method according to which polymer constituting the cladding layer and polymer constituting the core in molten state are discharged from a special nozzle while blending them or by combination of spinning step and cladding step. From the point of simplification of production process the composite spinning method is preferred.

The plastic optical fiber of the present invention uses polymers having higher glass transition temperature than the conventional plastic optical fibers and so can also be suitably used as sensor means and optical communication means to be provided in high temperature places such as engine room of automobiles and ships where conventional plastic optical fibers cannot be used.

That is, the present invention can provide a novel plastic optical fiber having the following various effects:

(1) High heat resistance can be provided since the cladding layer is constituted of a specific polycarbonate high in glass transition temperature.

(2) As a result, there is no need to provide a protective layer as a third layer in addition to a core and a cladding layer as needed in the conventional plastic optical fibers for improvement of heat resistance.

(3) Therefore, production process is not complicated.

The present invention of further illustrated by the following examples.

Preparation of polycarbonate oligomer 1

In 400 liters of 5% aqueous sodium hydroxide solution was dissolved 60 kg of bisphenol A to prepare an aqueous aodium hydroxide solution of bisphenol A.

Then, the aqueous sodium hydroxide solution of bisphenol A and methylene chloride which were kept at room temperature were introduced into a tubular reactor of 10 mm in inner diameter and 10 m in tube length through orifice plate at a flow rate of 138 l/hr and 69 l/hr, respectively and, in parallel therewith, phosgene was blown thereinto at a flow rate of 10.7 kg/hr to carry out reaction continuously for 3 hours. The tubular reactor used here was of double tube and a cooling water was flowed through a jacket part to keep the discharging temperature of reaction mixture at 25°C. PH of the discharged reaction mixture was kept at 10-11.

The thus obtained reaction mixture was allowed to stand to separate and remove the aqueous phase and 220 liters of methylene chloride phase was taken and then thereto was further added 170 liters of methylene chloride, followed by well stirring to obtain polycarbonate oligomer 1 (concentration: 317 g/l and polymerization degree: 3-4).

Preparation of polycarbonate A

200 ml of methylene chloride was added to 126 ml of the polycarbonate oligomer (containing 40 g of polycarbonate oligomer) obtained in the synthesis of polycarbonate oligomer 1 to dilute the oligomer. This was referred to as solution I.

Separately 7.64 g of sodium hydroxide and 19.3 g of 2,2-bis-(4-hydroxyphenyl)-1,1,1,3,3,3-hexafluoropropane (BPAF) were dissolved in 90 ml of water and this solution was referred to as solution II.

Said solution I and solution II were mixed and to the resulting mixture were added 0.034 ml of triethylamine and 0.8 g of p-tert-butylphenol as catalysts, followed by stirring for 2 hours to carry out reaction.

After the reaction, 500 ml of water and 500 ml of methylene chloride were added to the reaction mixture to separate into an organic phase and an aqueous phase.

The organic phase was subjected to alkali washing with 0.01 N sodium hydroxide solution and then acid washing with 0.1 N hydrochloric acid and then washing with water to remove methylene chloride to obtain polycarbonate A which was a flaky polymer.

The resulting polycarbonate A contained 25 mol% of recurring unit derived from BPAF according to NMR analysis and had a refractive index of 1.56 measured by Abbe refractometer and a glass transition temperature (Tg) of 158.8°C according to differential thermal analysis.

Preparation of polycarbonate B

Polycarbonate oligomer 2 was preprared in the same manner as in the synthesis of the polycarbonate oligomer 1 except that 34.8 kg of bisphenol A and 25.2 kg of BPAF were used in place of 60 kg of bisphenol A.

Then, reaction was effected in the same manner as in the preparation of polycarbonate A mentioned above except that the polycarbonate oligomer 2 was used in place of polycarbonate oligomer 1, thereby to obtain polycarbonate B containing 50 mol% of recurring unit derived from BPAF and having a refractive index of 1.54 and a glass transition temperature (Tg) of 166.1°C.

Preparation of polycarbonate C

Polycarbonate oligomer 3 was prepared in the same manner as in the synthesis of polycarbonate oligomer 1 mentioned above except that 14.4 kg of bisphenol A and 45.6 kg of BPAF were used in place of 60 kg of bisphenol A.

Then, reaction was effected in the same manner as in the preparation of polycarbonate A mentioned above except that the polycarbonate oligomer 3 was used in place of polycarbonate oligomer 1, thereby to obtain polycarbonate C containing 75 mol% of recurring unit derived from BPAF and having a refractive index of 1.52 and a glass transition temperature (Tg) of 173.4°C.

Preparation of polycarbonate D

Polycarbonate oligomer 4 was prepared in the same manner as in the synthesis of polycarbonate oligomer 1 except that 60 kg of BPAF was used in place of 60 kg of bisphenol A.

Then, reaction was effected in the same manner as in polycarbonate A except that polycarbonate oligomer 4 was used in place of polycarbonate oligomer 1, thereby to obtain polycarbonate D containing 100 mol% of recurring unit derived from BPAF and having a refractive index of 1.50 and a glass transition

temperature (Tg) of 180.7 ° C.

Example 1

Polycarbonate (refractive index: 1.59 and Tg: 148 ° C) containing recurring unit derived from bisphenol A as a polymer for core component and said polycarbonate A as a polymer for cladding component were simultaneously fed to spinning head of a composite spinning machine having a spinneret of 3 mm$\phi$ in nozzle bore by screw type melt extruders set at 250 ° C.

Then, the molten polymers were discharged at 220-270 ° C and coagulated by cooling and then taken out at a speed of 3 m/min to obtain a plastic optical fiber of 950 $\mu$m in diameter of core portion and 25 $\mu$m in thickness of cladding portion and about 1000 $\mu$m in outer diameter of cladding portion.

The thus obtained plastic optical fiber was divided into two and one of them was left to stand at room temperature and another was subjected to heat treatment at 130 ° C for 2000 hours.

Loss of light transmittance of them at 770 nm was measured.

The results are shown in Table 1.

Example 2

Example 1 was repeated except that polycarbonate B was used in place of polycarbonate A.

The results are also shown in Table 1.

Example 3

Example 1 was repeated except that polycarbonate C was used in place of polycarbonate A.

The results are also shown in Table 1.

Example 4

Example 1 was repeated except that polycarbonate D was used in place of polycarbonate A.

The results are shown in Table 1.

Table 1

| | Cladding polymer | Spinning temperature (°C) | Loss of light transmittance (dB/km) Room temp. | After heat treatment *1 |
|---|---|---|---|---|
| Example 1 | A | 220 | 1500 | 1600 |
| Example 2 | B | 230 | 1200 | 1270 |
| Example 3 | C | 250 | 1100 | 1150 |
| Example 4 | D | 270 | 1000 | 1030 |

*1: Heat treating conditions: 130°C, 2000 hours.

## Claims

1. A plastic optical fiber which consists of a core and a claddding as basic structural units, wherein the refractive index of the core is higher than that of the cladding by at least 0,01, **characterized in that** the cladding comprises a polycarbonate represented by the following formula (2):

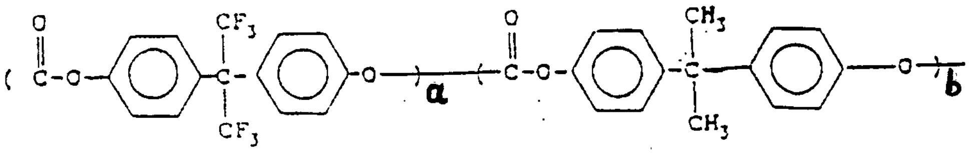
(2)

wherein a and b each represents molar amounts of each of the recurring units in the polymer, satisfying the relation:

$[a/(a+b)] \times 100 \geqq 20.$

2. A plastic optical fiber according to claim 1 **characterized in that** the core comprises a polycarbonate having a recurring unit represented by the following formula (4):

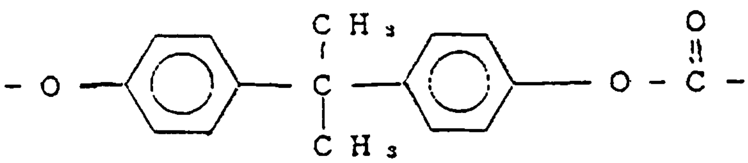
(4)

## Revendications

1. Fibre optique en matière plastique qui consiste en un coeur et une gaine comme unités structurales de base, dans laquelle l'indice de réfraction du coeur est plus élevé que celui de la gaine d'au moins 0,01, caractérisée en ce que la gaine comprend un polycarbonate représenté par la formule suivante (2) :

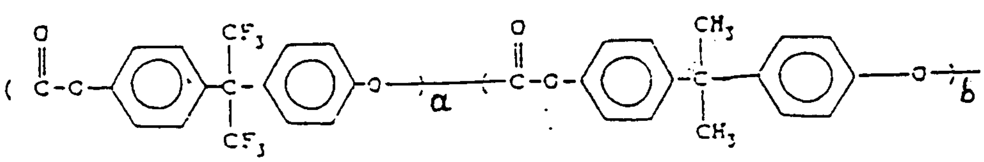
(2)

dans laquelle a et b représentent chacun les quantités molaires de chacun des motifs récurrents dans le polymère, satisfaisant à la relation :

$[a/(a+b)] \mathrm{X}\ 100 \geqq 20$

2. Fibre optique en matière plastique selon la revendication 1, caractérisée en ce que le coeur comprend un polycarbonate ayant un motif récurrent représenté par la formule suivante (4) :

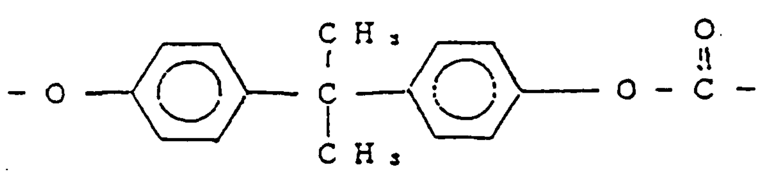
(4)

## Patentansprüche

1. Optische Faser aus Kunststoff, die aus einem Kern und einem Mantel als Grundstruktureinheiten

besteht, wobei der Brechungsindex des Kerns mindestens um 0,01 höher ist als der des Kerns, **dadurch gekennzeichnet,** daß der Mantel ein Polycarbonat der folgenden allgemeinen Formel (2) umfaßt:

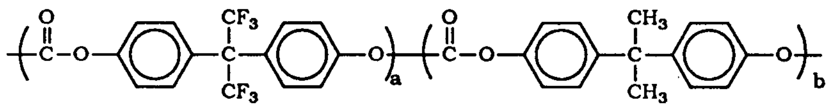

(2)

worin a und b jeweils molare Mengen jeder der wiederkehrenden Einheiten in dem Polymer darstellen, die der Beziehung

$[a/(a + b)] \times 100 \geqq 20$

genügen.

**2.** Optische Faser aus Kunststoff nach Anspruch 1, **dadurch gekennzeichnet,** daß der Kern ein Polycarbonat mit einer wiederkehrenden Einheit der folgenden Formel (4) umfaßt:

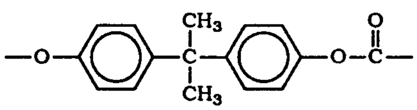

(4)